# NOUVEAU FASCICULE DE BREVET EUROPEEN

(11) **EP 0 300 945 B2**
(45) Date de publication et mention de la décision concernant l'opposition: **07.01.1998**
(45) Mention de la délivrance du brevet: 02.12.1992
(21) Numéro de dépôt: 88470012.1
(22) Date de dépôt: 22.06.1988
(51) Int. Cl.: A61C 19/00

(54) **Appareil automatique pour le nettoyage des pièces à main de dentisterie**
Automatischer Apparat für die Reinigung zahnärztlicher Handstücke
Automatic apparatus for cleaning dental handpieces

(30) Priorité: 24.07.1987 FR 8710654
(43) Date de publication de la demande: 25.01.1989
(73) Titulaire: MICRO MEGA S.A., F-25000 Besançon (FR)
(72) Inventeur: Guggenheim, Bernhard, Prof.Dr., CH-8703 Erlenbach (CH); Seigneurin, Michel, F-70190 Rioz (FR); Lacour, Bernard, F-25000 Besancon (FR); Jacoulet, Jean-Paul, F-25000 Besancon (FR)
(74) Mandataire: Poupon, Michel

(56) Documents cités:
- EP-A- 0 056 791
- DE-A- 3 104 237
- DE-A- 3 239 549
- FR-A- 2 425 844
- US-A- 3 371 986

## Description

La présente invention a pour objet un appareil automatique pour le nettoyage de une ou plusieurs pièces à main de dentisterie ou de turbines.

Au moins quotidiennement, le chirurgien-dentiste doit procéder systématiquement au nettoyage, à la lubrification et à la stérilisation des pièces à main qu'il utilise.

Pour l'instant, ces différentes opérations sont réalisées manuellement avec l'aide de divers instruments, tels que par exemple bombe de spray, etc... Ces opérations sont fastidieuses et certains praticiens ne les exécutent donc pas avec la fréquence nécessaire ou les font imparfaitement.

Il faut à cet égard noter que chaque pièce à main doit être nettoyée séparément, ce qui multiplie d'autant le temps passé.

Un appareil automatique a déjà été proposé par la demande de brevet en R.F.A. publiée avant examen DE-OS-3 239 549 qui décrit un appareil selon le préambule de la revendication 1. L'appareil décrit est cependant très sommaire et fonctionne en fait par aspiration (dépression), ce qui conduit à des résultats très peu fiables au niveau du nettoyage.

La présente invention a pour objet de remédier à ces inconvénients en proposant un appareil automatique qui permette le nettoyage complet et la désinfection de une ou plusieurs pièces à main de dentisterie ou de turbines, de manière à présenter celles-ci prêtes à l'utilisation.

Conformément à l'invention, ce résultat est obtenu par un appareil défini par la partie caractérisante de la revendication 1.

De manière avantageuse, l'ensemble fonctionnera avec de l'air sous pression qui, par un système d'électrovannes, enverra de l'air successivement dans chacun des réservoirs de fluides, lesdits fluides étant ainsi expulsés de leur réservoir et injectés dans la ou les pièces, où la turbine, via le nez sur lequel lesdites pièces sont montées.

L'appareil selon l'invention comportera de préférence plusieurs nez, par exemple au nombre de trois pour des pièces à main et un pour une turbine, ce qui correspond en moyenne à l'équipement d'un chirurgien dentiste. De manière en elle-même connue, les nez comportent chacun un axe avec entraineur, lesdits axes étant selon l'invention commandés en rotation par chacun un pignon engrenant l'un contre l'autre, un pignon de commande unique donnant le mouvement à l'ensemble, ledit pignon de commande étant mis en rotation par exemple par un moteur à air.

De nombreuses sécurités seront prévues sur l'appareil telles que par exemple :
- visualisation des niveaux de fluides dans les réservoirs ;
- sécurité de commande par une porte de fermeture de la chambre où se trouvent les pièces à nettoyer ;
- clapets de fermeture sur les nez, obturant ceux-ci lorsqu'ils ne sont pas utilisés.

On comprendra mieux l'invention à l'aide de la description ci-après d'un mode préféré de mise en oeuvre, donné à titre d'exemple non limitatif, en référence aux dessins annexés dans lesquels :
- la figure 1 est une vue de face de l'appareil conforme à l'invention ;
- la figure 2 est une vue de dessus de l'appareil de l'invention, capot de protection relevé ;
- la figure 3 représente un dispositif d'étanchéité de la porte de l'appareil,
- la figure 4 représente le schéma pneumatique de l'appareil.

Le principe de base consiste à nettoyer automatiquement une ou plusieurs pièces à main ou turbines. Dans ce qui suit, on décrira un appareil conformé pour trois pièces à main et une turbine, mais il doit être compris que ceci n'est nullement limitatif.

Selon l'invention, on fait passer à l'intérieur des pièces à nettoyer, avec rotation des axes intérieurs, plusieurs fluides de manière séquentielle tels que par exemple, à titre indicatif :
- de l'eau pendant une durée de 18 à 100 secondes ;
- du liquide désinfectant pendant une durée de 18 à 100 secondes ;
- de l'air, pour sécher, pendant une durée de 18 à 100 secondes ;
- de l'huile de lubrification, pendant une durée de 27 à 50 secondes.

A la fin de ce cycle, les pièces sont nettoyées, sèches, désinfectées, lubrifiées et prêtes à être utilisées.

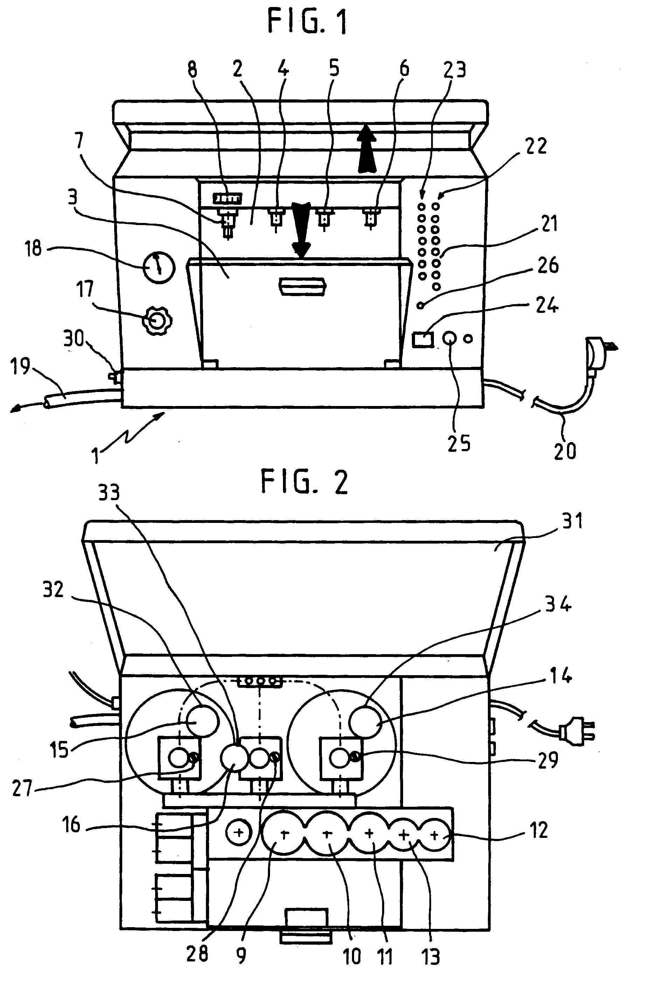

On se réfère maintenant à la figure 1.

L'appareil selon l'invention se présente sous la forme d'un caisson (1) déterminant intérieurement une chambre (2) fermée frontalement par une porte (3) articulée par exemple horizontalement sur le caisson (1).

A l'intérieur de cette chambre et à sa partie supérieure sont disposés trois nez (4,5,6) de moteurs dentaires standardisés sur lesquels peuvent s'accrocher de manière conventionelle, autant de pièces à main, non représentées. Un quatrième nez (7) peut être prévu pour supporter une turbine.

Les accouplements sont tous en eux-mêmes connus et ne seront pas décrits en détail. Les nez supportant les turbines peuvent être de plusieurs types, en eux-mêmes connus, suivant la disposition d'arrivée ou de départ de l'air et du spray.

Le nez de turbine (7) peut être changé en desserrant un, écrou moleté (8) accessible par l'extérieur, en fonction du type de turbine à nettoyer. Le nez est resserré par rotation inverse de l'écrou moleté.

Lorsque le nez (4,5,6) est destiné à recevoir un appareil à air (turbine), l'entrainement est assuré par un passage d'air, grâce à un connecteur spécifique en lui-même connu.

Les nez de moteurs comportent de manière classique un axe avec entraineur, lesdits axes étant entrainés en rotation chacun par un pignon (9,10,11) visibles à la figure 2, qui engrènent l'un contre l'autre. Un pignon de commande (12) entrainé par un moteur à air, non représenté, donne le mouvement à l'ensemble éventuellement avec un pignon satellite intermédiaire (13).

On a décrit ci-dessus la cinématique de commande de mise en rotation simultanée des nez et donc des organes intérieurs des pièces qui y sont fixées, les opérations de nettoyage devant obligatoirement être effectuées sur les organes en mouvement pour être efficaces.

Il s'agit maintenant d'amener les différents fluides à traverser les pièces.

L'appareil selon l'invention comprend :
- un réservoir d'eau (14) ;
- un réservoir (15) de produits désinfectants liquides ou vapeurs ;
- un réservoir d'huile (16).

L'appareil reçoit de l'air sous pression par une conduite (30) avec un détendeur (17) réglable, avec manomètre (18). Par un ensemble d'électrovannes, l'air parvient dans chacun des réservoirs selon un rythme et un cycle réglables. Ce dispositif sera décrit ultérieurement.

L'air ainsi admis pousse les fluides hors de leur réservoir respectif dans chacun des nez. Un clapet de sécurité ferme l'arrivée sur le nez si aucune pièce à main n'est montée sur celui-ci ; en montant une pièce à main sur un nez, l'arrière de celle-ci soulève le clapet et dégage l'ouverture permettant l'arrivée de fluide dans la douille arrière de la pièce à main.

Après avoir traversé les pièces à nettoyer, les fluides arrivent dans la chambre (2) par la tête de la pièce à main et sont évacués par en tube (19).

Les électrovannes sont commandées, de manière connue, par une platine électronique, l'ensemble étant alimenté électriquement par un cordon (20).

Les différentes fonctions successives peuvent être visualisées sur la face avant sur un pupitre (21). Sur ce pupitre on trouve des voyants (22) indiquant le cycle en cours et des réglages de temps de cycle (23).

La mise sous tension s'effectue par un interrupteur général (24), le cycle de nettoyage étant enclenché par un bouton poussoir (25).

Une sécurité prévoit que le cycle de nettoyage ne peut démarrer que porte (3) fermée, l'ouverture de celle-ci coupant le circuit.

Une autre sécurité prévoit que, lorsque le niveau d'un liquide est insuffisant, un voyant (26) de niveau s'allume ou s'éteint, coupant le cycle en cours.

Le dosage des fluides s'effectue pour chaque réservoir par une vis (27,28,29), le réglage ne pouvant s'opérer que pendant le temps d'utilisation desdits liquides. Les réservoirs sont fermés par des bouchons de remplissage (32,33,34).

Pour un dosage donné, le débit au regard de chaque liquide s'adapte automatiquement en fonction du nombre de nez utilisés.

L'appareil ne demande que peu d'entretien, les différentes interventions pouvant être effectuées en soulevant le capot supérieur (31) ou par l'arrière de l'appareil.

A titre d'exemple, on peut prévoir des réglages de temps, dans les gammes et pour les fonctions suivantes :
- lavage : de 18 à 100 secondes ;
- séchage : de 35 à 120 secondes, avec possibilité d'air sec pulsé ou non ;
- désinfectant : de 18 à 100 secondes ;
- attente : de 35 à 120 secondes ;
- séchage : de 18 à 100 secondes ;
- graissage : de 27 à 50 secondes ;
- extraction produits : de 5 à 25 secondes.

Un voyant de fin de cycle indique que celui-ci est terminé et que les pièces sont prêtes à être stérilisées.

De manière avantageuse, on prévoira au niveau de la porte (3) un dispositif d'étanchéité constitué d'un tube creux (35) disposé à la périphérie de l'encadrement recevant la porte. Lorsque la porte est fermée et que l'appareil est mis en marche, le tube (35) est mis sous pression. Grâce au gonflement du tube ainsi obtenu, on réalise une étanchéité parfaite car le tube souple, sous l'effet de la pression, épouse parfaitement les formes du contour de la porte et de l'encadrement.

Ce dispositif d'étanchéité ne présente pas les défauts d'étanchéité des joints caoutchouc classiques, dus au vieillissement.

Par ailleurs, il permet de réaliser une étanchéité optimale en dépit des légères surpressions qui peuvent naître dans la chambre de nettoyage lors du fonctionnement de l'appareil.

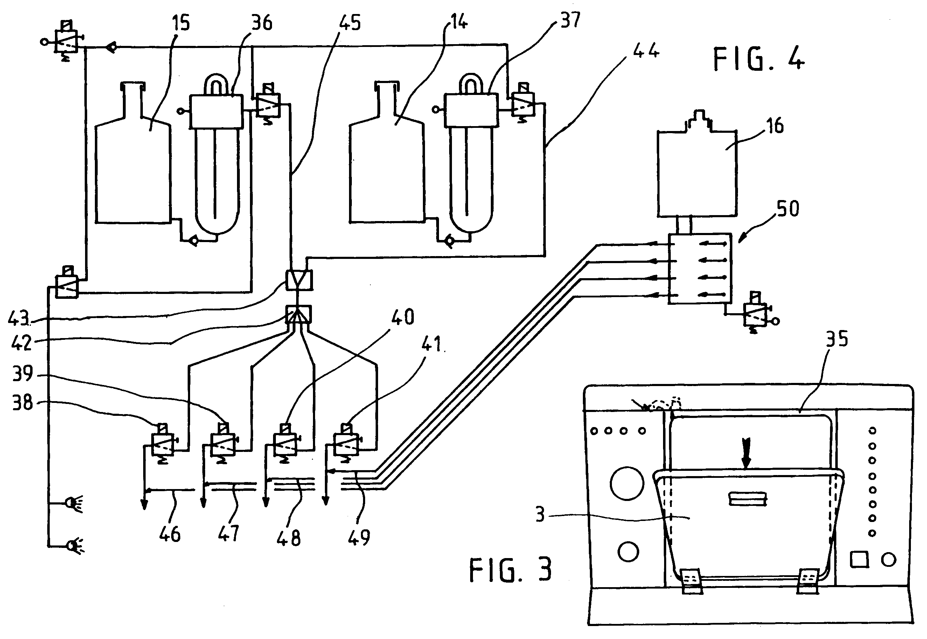

On s'attachera maintenant à décrire le fonctionnement pneumatique de l'appareil, en référence au schéma de la figure 4.

On y a représenté les différents réservoirs (14,15,16) précités.

Le système fonctionne avec de l'air sous pression selon des arrivées indiquées P, qui, par un ensemble d'électrovannes envoie l'air sous pression dans le réservoir de fluide sélectionné suivant la phase de travail de l'appareil. Le fluide est alors expulsé du réservoir pour être injecté vers la ou les pièces à main ou la turbine via le nez sur lequel lesdites pièces sont montées.

Avantageusement, les réservoirs (14,15) seront pourvus d'un dispositif (36,37) de génération d'un brouillard air-fluide permettant de régler le dosage de fluide.

A chaque nez recevant un instrument est associée une électrovanne (38,39,40,41) permettant ou non le passage du brouillard d'eau ou de désinfectant, l'entrée de chacune de ces électrovannes étant reliée en un point commun (42,43) où arrivent à la fois le conduit (44) de brouillard d'eau et le conduit (45) de brouillard de désinfectant.

En outre, à chaque nez est associé une arrivé d'huile (46,47,48,49) située en aval de l'électrovanne associée audit nez.

Le dispositif de distribution d'huile (50) sera par exemple constitué d'un moyen connu assurant l'injection d'huile simultanément dans toutes les arrivées d'huile.

En variante, le dispositif comportera un ensemble de commande assurant lors des phase de passage de brouillard d'eau, de brouillard de désinfectant ou d'huile un mode d'ouverture-fermeture des électrovannes associées aux nez selon un processus de chenillard.

Concernant la structure des nez, on prévoiera que ceux-ci seront dépourvus de joints, ce qui assure ainsi par débordement le lavage et la désinfectation des embouts et des tuyaux de spray des pièces à main.

Enfin, on prévoiera que les conduits d'huile aboutissent à la pièce à main à un niveau inférieur à l'entrée des canaux de spray de ladite pièce à main, ou des entrées correspondantes dans le nez supportant la pièce à main, ce qui évite d'introduire de l'huile dans les canaux de spray.

## Revendications

1. Appareil automatique pour le nettoyage de une ou plusieurs pièces à main de dentisterie ou de turbines, du type comportant au moins un nez (4,5,6) muni de ses moyens d'entrainement nez sur lequel ou lesquels sont montées la ou les pièces à main à nettoyer, (charactérisé en ce que) le ou lesdits nez sont reliés à plusieurs reservoirs de fluides, lesdits fluides peuvent être amenés séquentiellement à traverser, en un temps et selon une quantité réglables, le ou les nez puis la ou les pièces à main qui y sont montées, les axes intérieurs de la ou les pièces à main étant entraînés en rotation par le ou les nez,
- chaque nez d'entrainement est un nez de moteur standardisé,
- lesdits réservoirs contiennent respectivement de l'eau, un désinfecfant et de l'huile,
- et que l'appareil fonctionne avec de l'air sous pression qui, par un système d'électrovannes, envoie de l'air successivement dans chacun des réservoirs de fluides, lesdits fluides étant ainsi expulsés de leur réservoir et injectés dans la ou les pièces, ou la turbine, via le nez sur lequel lesdites pièces sont montées.

2. Appareil selon la revendication 1, caractérisé en ce qu'il comporte trois nez pour des pièces à main et un pour une turbine.

3. Appareil selon l'une quelconque des revendications 1 et 2, caractérisé en ce que les nez comportent chacun un axe avec entraîneur, lesdits axes étant commandés en rotation par chacun un pignon (9,10,11) engrenant l'un contre l'autre, un pignon de commande unique (12) donnant le mouvement à l'ensemble, ledit pignon de commande étant mis en rotation par un moteur à air.

4. Appareil selon l'une quelconque des revendications 1 à 3, caractérisé en ce qu'il est conformé selon un caisson (1) déterminant intérieurement une chambre (2) fermée frontalement par une porte (3) articulée sur le caisson (1).

5. Appareil selon l'une quelconque des revendications 1 à 4, caractérisé en ce que le nez de turbine (7) peut être changé en serrant, respectivement desserrant, un écrou moleté (8) accessible par l'extérieur.

6. Appareil selon l'une quelconque des revendications 1 à 5, caractérisé en ce qu'il comporte :
- un réservoir d'eau (14) ;
- un réservoir (15) de produits désinfectants liquides ou vapeurs ;
- un réservoir d'huile (16).

7. Appareil selon la revendication 6, caractérisé en ce qu'il reçoit de l'air sous pression par une conduite (30) avec un détendeur (17) réglable, l'air parvenant par un ensemble d'électrovannes dans chacun des réservoirs selon un rythme et un cycle réglables.

8. Appareil selon l'une quelconque des revendications 1 à 7, caractérisé en ce que un clapet de sécurité ferme l'arrivée sur le nez si aucune pièce à main n'est montée sur celui-ci.

9. Appareil selon l'une quelconque des revendications 1 à 8, caractérisé en ce que le cycle de nettoyage ne peut démarrer que porte (3) fermée.

10. Appareil selon l'une quelconque des revendications 1 à 9, caractérisé en ce que chaque réservoir comporte une vis de dosage (2,7,28,29).

## Claims

1. Automatic apparatus for cleaning one or more dental handpieces or turbines, of the type comprising at least one projection member (4, 5, 6) provided with its drive means, projection member or members on which are mounted the handpiece or handpieces to be cleaned, characterised in that said projection member or members are connected to a plurality of fluid reservoirs, said fluids can be caused to traverse, in sequence, at an adjustable time and in an adjustable quantity, the projection member or members then the handpiece or handpieces which are mounted thereon, the internal spindles of the handpiece or handpieces being caused to rotate by the projection member or members,
- each drive projection member is a projection member of a standardised motor,
- said reservoirs respectively contain water, a disinfectant and oil,
- and in that the apparatus operates with compressed air which, via a system of solenoids, sends air in succession into each one of the fluid reservoirs, said fluids thereby being expelled from their reservoir and injected into the piece or pieces, or the turbine, via the projection member on which said pieces are mounted.

2. Apparatus according to claim 1, characterised in that it comprises three projection members for handpieces and one for a turbine.

3. Apparatus according to any of claims 1 and 2, characterised in that the projection members each comprise a spindle with a drive mechanism, each of said spindles being rotatably controlled by a cogwheel (9, 10, 11) engaging one against the other, a single control cogwheel (12) imparting movement to the assembly, said control cogwheel being set in rotation by a motor driven by air.

4. Apparatus according to any of claims 1 to 3, characterised in that it takes the form of a box (1) which internally determines a chamber (2) closed at its front end by a door (3) hinged on the box (1).

5. Apparatus according to any of claims 1 to 4, characterised in that the projection member of the turbine (7) may be changed by tightening or untightening a knurled screw (8), which is accessible externally.

6. Apparatus according to any of claims 1 to 5, characterised in that it comprises:
- a water reservoir (14);
- a reservoir (15) for liquid or vapour disinfectant products; and
- an oil reservoir (16).

7. Apparatus according to claim 6, characterised in that it receives compressed air through a pipe (30) with an adjustable pressure-reducer (17), the air reaching, via an assembly of solenoids, each of the reservoirs according to an adjustable rhythm and cycle.

8. Apparatus according to any of claims 1 to 7, characterised in that a safety valve shuts off the supply to the projection member if no handpiece is mounted thereon.

9. Apparatus according to any of claims 1 to 8, characterised in that the cleaning cycle can only commence with the door (3) closed.

10. Apparatus according to any of claims 1 to 9, characterised in that each reservoir is provided with a titration screw (2, 7, 28, 29).

## Patentansprüche

1. Automatischer Apparat für die Reinigung eines oder mehrerer zahnärztlicher Handstücke oder Turbinen, welche zumindest einen Zapfen (4, 5, 6) enthalten, welcher mit seinen Antriebsmitteln ausgestattet ist und auf dem oder auf die das zur reinigende Handstück oder die Handstücke aufgesetzt werden oder die Handstücke aufgesetzt sind, **dadurch gekennzeichnet**, dass der oder die genannten Zapfen mit mehreren Flüssigkeitsbehältern verbunden sind, dass die genannten Flüssigkeiten hinsichtlich der Zeit und Menge regelbar sequentiell zum Durchlaufen des Zapfens oder der Zapfen und dann des Handstückes oder der Handstücke, auf welchem sie montiert sind, zugeführt werden können, dass die inneren Achsen des Handstückes oder der Handstücke von dem Zapfen oder den Zapfen rotatorisch angetrieben sind, dass
- jeder Antriebszapfen ein Zapfen (4, 5, 6) eines standardisierten zahnärztlichen Motors ist,
- die genannten Behälter jeweils Wasser, ein Desinfektionsmittel und Öl enthalten und dass
- der Apparat mit Druckluft arbeitet, welche mittels eines Systems von Elektroventilen nacheinander jedem der Flüssigkeitsbehälter zugeführt wird, wobei auf diese Weise die genannten Flüssigkeiten aus ihrem Behälter gepresst und über den Zapfen, auf welchem die genannten Teile gehalten sind, in das Handstück, die Handstücke oder die Turbine eingespritzt wird.

2. Apparat nach Anspruch 1, **dadurch gekennzeichnet**, dass er drei Zapfen für Handstücke und einen für eine Turbine enthält.

3. Apparat nach einem der Ansprüche 1 oder 2, **dadurch gekennzeichnet**, dass die Zapfen jeweils eine Achse mit einem Antrieb enthalten, dass die genannten Achsen jeweils durch ein Ritzel (9, 10, 11) in Rotation versetzt sind, welche ineinander kämmen und von einem einzigen Antriebszahnrad (12) angetrieben werden, welches von einem Druckluftmotor in Drehung versetzt wird.

4. Apparat nach einem der Ansprüche 1 bis 3, **dadurch gekennzeichnet**, dass er als ein Gehäuse (1) ausgebildet ist, welches im Inneren eine Kammer (2) bildet, die von einer schwenkbar am Gehäuse angebrachten Tür (3) an der Frontseite verschließbar ist.

5. Apparat nach einem der Ansprüche 1 bis 4, **dadurch gekennzeichnet**, dass der Zapfen für die Turbine (7) durch Festziehen oder Lockern einer von außen zugänglichen Rändelmutter (8) austauschbar ist.

6. Apparat nach einem der Ansprüche 1 bis 5, **dadurch gekennzeichnet**, dass er einen Wasserbehälter (14), einen Behälter (15) mit Desinfektionsflüssigkeiten oder Dämpfen und einen Ölbehälter (16) enthält.

7. Apparat nach Anspruch 6, **dadurch gekennzeichnet**, dass er die Druckluft über eine Leitung (30) mit einem einstellbaren Druckminderventil (17) erhält, und die Luft über eine Anordnung von Elektroventilen zu jedem der Behälter in einem einstellbaren Rhythmus und Zyklus gelangt.

8. Apparat nach einem der Ansprüche 1 bis 7, **dadurch gekennzeichnet**, dass ein Sicherheitsventil den Einlass zu dem Zapfen verschließt, auf dem kein Handstück aufgesetzt ist.

9. Apparat nach einem der Ansprüche 1 bis 8, **dadurch gekennzeichnet**, dass der Reinigungszyklus nicht vor dem Schließen der Tür (3) gestartet werden kann.

10. Apparat nach einem der Ansprüche 1 bis 9, **dadurch gekennzeichnet**, dass jeder Behälter eine Dosierschraube (27, 28, 29) aufweist.
